# EUROPÄISCHE PATENTSCHRIFT

(11) **EP 0 378 872 B1**
(45) Veröffentlichungstag und Bekanntmachung des Hinweises auf die Patenterteilung: **02.11.1994**
(21) Anmeldenummer: 89203177.4
(22) Anmeldetag: 13.12.1989
(51) Int. Cl.: C01B 17/44

(54) **Verfahren zur Verhinderung der S02-Bildung in bei der Bariumsulfidherstellung entstehenden Abgasen**
Process for the prevention of SO2 formation in flue gases during barium sulfide production
Procédé pour éviter la formation de SO2 dans les gaz d'échappement dans la production de sulfure de baryum

(30) Priorität: 17.01.1989 DE 3901139
(43) Veröffentlichungstag der Anmeldung: 25.07.1990
(73) Patentinhaber: METALLGESELLSCHAFT AG, 60015 Frankfurt (DE)
(72) Erfinder: Röhrborn, Hans-Joachim, Dr., D-4133 Neukirchen-Vluyn (DE)

(56) Entgegenhaltungen:
- GB-A- 897 589
- US-A- 1 723 138
- CHEMICAL ABSTRACTS, vol. 73, no. 18, 2 November 1970 Columbus, Ohio, USA Safiullin. N.Sh. et al.: "Preparation of barium sulfide" Seite 110; rechte Spalte; ref. no. 89659Z

## Beschreibung

Die Erfindung betrifft ein Verfahren zur Verhinderung der SO₂-Bildung in Abgasen, die bei der Herstellung von Bariumsulfid durch trockene thermische Reduktion einer Schwerspat/Kohle-Mischung unter Zusatz von Calciumcarbonat im Drehrohrofen entstehen.

Basisrohstoff für die Herstellung von Bariumchemikalien ist natürlicher Schwerspat. Um das Barium aufzuschließen, d.h. es in eine wasserlösliche Form zu bringen, wird Schwerspat mit Kohle oder Koks im Drehrohrofen bei Reaktionstemperaturen oberhalb von 1150°C zu Bariumsulfid reduziert. Aus dem Reduktionsgut wird das Bariumsulfid mit Wasser heiß gelaugt. Die gereinigte Lauge ist die Ausgangslösung zur Herstellung weiterer Bariumchemikalien, wie Ba(OH)₂, BaSO₄, BaCO₃, BaCl₂, Ba(NO₃)₂.

Der in der Natur vorkommende Schwerspat ist im allgemeinen durch Begleitmineralien verunreinigt, so daß meist eine mechanische Aufbereitung, beispielsweise Setzwäsche und/oder Flotation, zur Aufkonzentrierung nötig ist. Man erhält auf diese Weise einen Rohstoff, der ca. 95 % BaSO₄ enthält. Die verunreinigenden Begleitstoffe sind in der Regel SiO₂, Al₂O₃, Fe₂O₃, CaCO₃, CaSO₄, SrSO₄ u.a.

Während die thermische Zersetzung von reinem Bariumsulfat gemäß 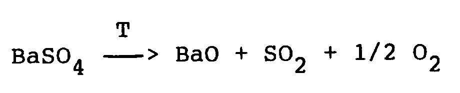
merklich erst oberhalb 1400°C beginnt, finden in Gegenwart von "sauren" Oxiden wie SiO₂, Al₂O₃, Fe₂O₃ jedoch schon bei sehr viel niedrigeren Temperaturen, nämlich schon bei der Reduktionstemperatur (ca. 1000°C) unerwünschte Sekundär- bzw. Nebenreaktionen eben dieser Oxide mit Bartumsulfat unter SO₂/SO₃-Entwicklung etwa nach folgenden Gleichungen statt:

BaSO₄ + SiO₂ → BaSiO₃ + SO₂ + 1/2 O₂

BaSO₄ + Al₂O₃ → Ba(AlO₂)₂ + SO₂ + 1/2 O₂

BaSO₄ + Fe₂O₃ → Ba(FeO₂)₂ + SO₂ + 1/2 O₂

Diese unerwünschten Nebenreaktionen sind in zweifacher Hinsicht von erheblichem Nachteil: Zum einen weil die Ausbeute an BaS durch die Bildung von Ba-silikat, Ba-aluminat oder Ba-ferrit vermindert wird, zum anderen weil im Abgas eine erhebliche Menge SO₂/SO₃ entsteht, die nach heute gültigen Umweltschutzauflagen nicht mehr in die Atmosphäre abgegeben werden darf.

Die erwähnten unerwünschten Mengen an SO₂/SO₃ werden noch um diejenigen Mengen erhöht, die bei der Verbrennung des Schwefelgehalts der Reduktionskohle enstehen, so daß die Reduktion des Schwerspats etwa nach folgender Reaktionsgleichung verläuft: 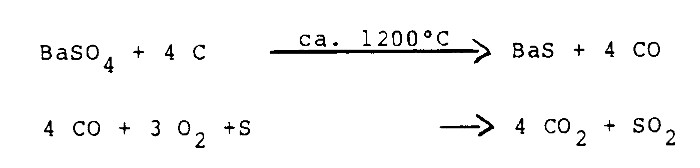
Aus dem Dokument US-PS 1,723,138 ist ein Verfahren zur Herstellung von Schwarzschmelze durch Erhitzen eines Gemischs aus Baryt und kohlenstoffhaltigem Material bekannt, wobei der Mischung Calciumcarbonat in ausreichender Menge zugesetzt wird, um die Schmelztemperatur zu verbessern. Mit dem vorbekannten Zusatz wird die Bildung von unlöslichem Bariumsilikat verhindert und der Anteil des löslichen Bariumsulfids in der Schwarzschmelze erhöht. Der Zusatz kann in Mengen von etwa 10 % oder mehr oder auch in äquivalenten Mengen erfolgen, je nach Gehalt an Kieselsäure im Ausgangsmaterial. Auch in den Chemical Abstracts, Vol. 73, No. 18, 2.11.1970, p. 110, ref.no. 89659Z wird beschrieben, daß durch einen Zusatz von CaCO₃, MgCO₃ oder ihrer Mischung in Mengen von 1 bis 5 Gew.-% des BaSO₄ der Grad der Reduktion des BaSO₄ erhöht und die Qualität des BaS verbessert werden kann. Über Abgase bzw. über SO₂-Gehalte im Abgas sind in den genannten Vorveröffentlichungen keine Angaben gemacht.

Weiterhin ist aus dem Dokument GB-A-897,589 ein Verfahren zur Herstellung von Calciumoxid und Bariumsulfid aus Calciumcarbonat, Bariumsulfat, Bariumcarbonat und Calciumhydroxid enthaltenden Mischungen bekannt. Solche Mischungen fallen im Rahmen der Papierherstellung bei der Aufarbeitung der sogenannten "Schwarzlauge" an. Um zu den angegebenen Endprodukten Calciumoxid und Bariumsulfid zu gelangen, wird vorgeschlagen, die Umsetzung der feuchten Ausgangsstoffe unter Bedingungen durchzuführen, bei denen Wassergas gebildet wird, welches als Reduktionsmittel für das Bariumsulfat dient. Weiterhin soll durch den gewählten Reaktionstemperaturbereich die Bildung von "totgebranntem" Kalk vermieden werden.

Der Erfindung liegt die Aufgabe zugrunde, die Nachteile der vorbekannten Verfahren zu vermeiden und ein ebenso einfaches wie wirtschaftliches Verfahren bereitzustellen, das äußerst geringe Mengen Schwefeldioxid im Abgas aufweist.

Die Erfindung löst die Aufgabe mit einem Verfahren zur Verhinderung der SO₂-Bildung in Abgasen, die bei der Herstellung von Bariumsulfid durch trockene thermische Reduktion einer Schwerspat/Kohle-Mischung unter Zusatz von Calciumcarbonat im Drehrohrofen entstehen. Die Erfindung besteht darin, daß eine ein Gemisch von Calciumhydroxid und Calciumcarbonat in homogener Verteilung enthaltende Reduktionsmischung verwendet wird, wobei das Calciumhydroxid und -carbonat in trockener und feinteiliger Form mit einer Teilchengröße von 0,01 bis 0,5 mm eingesetzt werden.

Auf diese Weise lassen sich die Pulver leicht und homogen in die Reduktionsmischung einarbeiten. Die Reduktionsmischung besteht in an sich bekannter Weise aus natürlichem, vorgereinigtem Schwerspat einer Feinheit von 0,1 bis 2 mm und feinteiliger Kohle oder Koks im Verhätlnis von etwa 5:1. In der Reduktionsmischung ist gemäß dem Verfahren der Erfindung das Gemisch aus Calciumhydroxid und Calciumcarbonat in einer Menge von 1 bis 10 Gew.-% enthalten. Dabei richtet sich die Menge nach dem Anteil der noch vorhandenen Verunreinigungen an Kieselsäure, Aluminiumoxid und Eisenoxid. Zweckmäßig wird ein Gemisch aus 2 bis 4 Gew.-% Ca(OH)₂ und 2 bis 4 Gew.-% CaCO₃ verwendet. Insbesondere hat sich ein Gemisch aus 3 Gew.-% Ca(OH)₂ und 3 Gew.-% CaCO₃ als vorteilhaft erwiesen. Das optimale Ca(OH)₂/CaCO₃-Mischungsverhältnis hängt sowohl von dem Anteil der Gangart des Schwerspats ab, was die Menge des CaCO₃-Zusatzes bestimmt; als auch hängt das Mischungsverhältnis vom Schwefelgehalt der Kohle ab, was die Menge des Ca(OH)₂-Zusatzes bestimmt.

Die Entfernung des aus dem Kohleschwefel gebildeten SO₂ erfolgt mit Ca(OH)₂, das bei ca. 350°C thermisch in CaO und H₂O zerfällt. Das Ca(OH)₂ selbst und das thermisch gebildete CaO reagieren mit dem schon gebildeten SO₂ des Rauchgases zu Calciumsulfit. Diese Bildung erfolgt im kälteren Teil des Drehrohr-Reduktionsofens. Dieses CaSO₃, wie auch CaSO₄, wandern dann mit dem Hauptgut, nämlich der Schwerspat/Koks-Mischung in die Reduktionszone, werden hier zu Calciumsulfid reduziert und mit dem Reduktionsgut ausgetragen. Nach der BaS-Wasserlaugung verbleibt das Calciumsulfid im Laugenrückstand unlöslich. Der Einsatz von CaCO₃ ist für diese Teilreaktion nicht geeignet, da CaCO₃ erst oberhalb 850°C zu CaO und CO₂ thermisch gespalten wird.

Um die unerwünschten Nebenreaktionen gemäß den allgemeinen Reaktionsgleichungen

BaSO₄ + M₂O₃ → BaO . M₂O₃ + SO₂ + 1/2 O₂

(M = Al. Fe^{III})

BaSO₄ + SiO₂ → BaO . SiO₂ + SO₂ + 1/2 O₂

zu unterbinden, enthält das Gemisch einen Anteil an Calciumcarbonat. Dieses wird bei Temperaturen oberhalb 850°C zu reaktivem Calciumoxid gespalten, welches bevorzugt mit SiO₂ und dem Aluminium- und Eisenoxid reagiert und diese Oxide zu neutralen Verbindungen ohne Entstehung von SO₂/SO₃ abbindet. Diese neutralen Verbindungen verbleiben bei der anschließenden Wasserlaugung im Laugenrückstand und werden als Gesamtrückstand wie üblich entsorgt. Gegebenenfalls erfolgt noch eine Nachlaugung mit HCl zur Gewinnung von BaCl₂ aus dem noch nicht vollständig ausgewaschenen Rückstand der Laugung. Da somit in Sekundärreaktionen kein BaSO₄ mehr verbraucht wird, steht dieses für die Reduktion zu BaS zur Verfügung, was die Gesamtausbeute an wasserlöslichem BaS bezogen auf eingesetztes BaSO₄ entsprechend erhöht.

Es gelingt mit dem Verfahren der Erfindung, ca. 80 bis 85 % des SO₂-Gehaltes im Abgas zu reduzieren, was eine erhebliche Einsparung an Investitionen und Betriebskosten bei der nachzuschaltenden Abgasreinigungsanlage bedeutet.

Die Erfindung wird anhand der nachstehenden Beispiele näher und beispielhaft erläutert. Hierbei ist den Vergleichsbeispielen 1 bis 3 das Beispiel 4 gemäß der Erfindung gegenübergestellt.

### Beispiel 1

Ein Drehrohrofen mit einer Länge von ca. 50 m und einem Durchmesser von ca. 2 m wurde mit einer Mischung aus 4,3 t/h Schwerspat (95 % BaSO₄, 5 % SiO₂ + Al₂O₃ + Fe₂O₃, Korngröße kleiner als 500 µm) und 0,86 t/h Petrolkoks (Korngröße 50 % kleiner als 250 µm, Schwefelgehalt 2,1 %) beschickt und bei 1150 bis 1200°C betrieben. Es resultierte ein Reduktionsgut mit ca. 83 % BaS (wasserlöslich). Das Abgas enthielt ca. 12 g SO₂/Nm³.

### Beispiel 2

Das in Beispiel 1 beschriebene Drehrohr wurde mit einer Mischung bestehend aus 4,3 t/h Schwerspat, 0,86 t/h Petrolkoks entsprechend Beispiel 1 sowie 240 kg/h Ca(OH)₂ einer Korngröße kleiner als 90 µm (99 %) beschickt und die Mischung bei 1150°C reduziert.

| | |
|---|---|
| Ausbeute | 85,7 % BaS (wasserlöslich) |
| Abgas | 4,7 g SO₂/Nm³ |

### Beispiel 3

Das in Beispiel 1 beschriebene Drehrohr wurde mit einer Mischung bestehend aus 4,3 t/h Schwerspat, 0,86 t/h Petrolkoks entsprechend Beispiel 1 sowie 320 kg CaCO₃ einer Korngröße kleiner als 63 µm (98 %) beschickt und die Mischung bei 1150°C reduziert.

| | |
|---|---|
| Ausbeute | 82,8 % BaS (wasserlöslich) |
| Abgas | 7,4 g SO₂/Nm³ |

### Beispiel 4

Das in Beispiel 1 beschriebene Drehrohr wurde mit einer Mischung aus 4,3 t/h Schwerspat, 0,86 t/h Petrolkoks entsprechend Beispiel 1 sowie 170 kg Ca(OH)₂ und 215 kg CaCO₃ jeweils einer Korngröße kleiner als 90 µm (99 %) beschickt und die Mischung bei 1200°C reduziert.

| | |
|---|---|
| Ausbeute | 86 % BaS (wasserlöslich) |
| Abgas | 2,4 g SO₂/Nm³ |

Wie aus den Beispielen 1 bis 4 ersichtlich ist, zeigt die Mischung Ca(OH)₂/CaCO₃ bezüglich der Senkung des SO₂-Gehaltes im Abgas das beste Ergebnis.

## Patentansprüche

1. Verfahren zur Verhinderung der SO₂-Bildung in Abgasen, die bei der Herstellung von Bariumsulfid durch trockene thermische Reduktion einer Schwerspat/Kohle-Mischung unter Zusatz von Calciumcarbonat im Drehrohrofen entstehen, wobei eine ein Gemisch von Calciumhydroxid und Calciumcarbonat in homogener Verteilung enthaltende Reduktionsmischung verwendet wird, wobei das Calciumhydroxid und -carbonat in trockener und feinteiliger Form mit einer Teilchengröße von 0,01 bis 0,5 mm eingesetzt werden.

2. Verfahren nach Anspruch 1, dadurch gekennzeichnet, daß eine Reduktionsmischung mit einem Gehalt von 1 bis 10 Gew.-% eines Gemischs aus Ca(OH)₂ und CaCO₃ verwendet wird.

3. Verfahren nach den Ansprüchen 1 bis 2, dadurch gekennzeichnet, daß ein Gemisch aus 1 bis 5 Gew.-% Ca(OH)₂ und 1 bis 5 Gew.-% CaCO₃ verwendet wird.

## Claims

1. A process for preventing a formation of SO₂ in exhaust gases which are formed during the preparation of barium sulfide in a rotary kiln by a dry thermal reduction of a barytes-coal mixture with an addition of calcium carbonate, wherein a reducing mixture that contains a mixture of calcium hydroxide and calcium carbonate in a homogeneous distribution is used and the calcium hydroxide and calcium carbonate are used in a dry particulate form in a particle size of 0.01 to 0.5 mm.

2. A process according to claim 1, characterized in that a reducing mixture is used which contains 1 to 10% by weight of a mixture of Ca(OH)₂ and CaCO₃.

3. A process according to claims 1 to 2, characterized in that a mixture of 1 to 5% by weight Ca(OH)₂ and 1 to 5% by weight CaCO₃ is used.

## Revendications

1. Procédé pour empêcher la formation de SO₂ dans des effluents gazeux qui se produisent lors de la préparation du sulfure de baryum par réduction thermique à sec d'un mélange de sulfate de baryum et de charbon, avec addition de carbonate de calcium au four tubulaire rotatif, en utilisant un mélange réducteur contenant, suivant une répartition homogène, un mélange d'hydroxyde de calcium et de carbonate de calcium, l'hydroxyde de calcium et le carbonate de calcium à l'état sec et finement divisé ayant une granulométrie de 0,01 à O,5 mm.

2. Procédé suivant la revendication 1, caractérisé en ce qu'il consiste à utiliser un mélange réducteur ayant une teneur de 1 à 10% en poids d'un mélange de Ca(OH)₂ et de CaCO₃.

3. Procédé suivant la revendication 1 ou 2, caractérisé en ce qu'il consiste à utiliser un mélange composé de 1 à 5% en poids de Ca(OH)₂ et de 1 à 5% de CaCO₃.
